# EUROPÄISCHE PATENTSCHRIFT

(11) **EP 3 299 637 B1**
(45) Veröffentlichungstag und Bekanntmachung des Hinweises auf die Patenterteilung: **15.05.2019**
(21) Anmeldenummer: 17191979.8
(22) Anmeldetag: 19.09.2017
(51) Int. Cl.: F15B 15/28, B66F 9/075, B66F 9/22, G01D 5/347, G01N 21/31, B66F 9/08, B66F 9/14, G01D 5/30

(54) **FLUIDZYLINDER MIT EINER OPTISCHEN SENSOREINHEIT**
FLUID CYLINDER WITH AN OPTICAL SENSOR UNIT
VÉRIN DOTÉ D'UNE UNITÉ DE CAPTEUR OPTIQUE

(30) Priorität: 21.09.2016 DE 102016117800
(43) Veröffentlichungstag der Anmeldung: 28.03.2018
(73) Patentinhaber: Jungheinrich Aktiengesellschaft, 22047 Hamburg (DE)
(72) Erfinder: Leichnitz, Dr., Julia, 22339 Hamburg (DE); Geilsdorf Dr., Hendrik, 22417 Hamburg (DE)
(74) Vertreter: Hauck Patentanwaltspartnerschaft mbB

(56) Entgegenhaltungen:
- EP-A2- 0 978 659
- WO-A1-95/01510
- DE-A1- 10 242 630
- US-A- 5 343 045
- US-A1- 2002 083 826
- US-A1- 2002 179 824

## Beschreibung

Die vorliegende Erfindung betrifft einen Fluidzylinder mit einer in einem Zylindermantel geführten Kolbenstange, an der eine Markierung mit einer Vielzahl von Marken vorgesehen ist, wobei eine optische Sensoreinheit auf die Markierung ausgerichtet ist.

Fluidzylinder mit optischen Sensoreinheiten werden für die Positionserfassung der Kolbenstange eingesetzt. Aus EP 2 222 966 B1 ist ein fluiddynamischer Aktuator bekannt geworden, auf dessen Kolbenstange Markierungen gefräst sind, wobei es Rillen gibt, die sich in einer ersten Richtung erstrecken und Rillen, die sich in einer zweiten Richtung, relativ dazu erstrecken. Die optischen Sensoren identifizieren die Rillen und ermitteln durch Abzählen die Position der Kolbenstange.

Aus EP 1 461 585 ist eine flüssigkeitsdruckbetätigte Kolben-/Zylinder-Anordnung mit einem Markierungszeichen lesenden Sensor bekannt geworden, der eine Bewegung von Kolben und Zylinder relativ zueinander erfasst. Der Sensor sitzt zwischen zwei Dichtungen und ist sowohl gegenüber dem Druck im Inneren des Zylinders als auch gegenüber der Verschmutzung außerhalb des Zylinders abgeschirmt.

Aus DE 102 42 630 A1 ist eine Mess- und Steuervorrichtung für Hebebühnen bekannt geworden, bei der eine Verschmutzung einer markierten Messstrecke mit Öl überwacht wird. Hierbei werden durch die Verschmutzung hauptsächlich die Reflexionseigenschaften in den Zwischenräumen zwischen den Markierungen beeinträchtigt, weshalb die Signalwerte der Maxima verringert werden. Die durch die Verschmutzung beeinträchtigten Signale werden entsprechend korrigiert.

Der Erfindung liegt die Aufgabe zugrunde, einen Fluidzylinder mit einer optischen Sensoreinheit dahingehend weiterzuentwickeln, dass möglichst viele Informationen mit einfachen Mitteln der Sensoreinheit entnommen werden.

Erfindungsgemäß wird die Aufgabe durch einen Fluidzylinder mit den Merkmalen aus Anspruch 1 gelöst. Vorteilhafte Ausgestaltungen der Erfindung bilden den Gegenstand der Unteransprüche 2 bis 8.

Der erfindungsgemäße Fluidzylinder besitzt eine in einem Zylindermantel geführte Kolbenstange, an der eine Markierung mit einer Vielzahl von Marken vorgesehen ist. Zudem besitzt der Fluidzylinder eine optische Sensoreinheit, die auf die Markierung ausgerichtet ist. Sensoreinheit und Markierung können dann beispielsweise zusammenwirken, um die Position der Kolbenstange zu erfassen. Die Sensoreinheit weist eine Lichtquelle und mindestens zwei optoelektronische Sensorelemente auf. Von den Sensorelementen ist eines für einen ersten Wellenlängenbereich und ein weiteres für einen zweiten Wellenlängenbereich stärker empfindlich. Bei dem erfindungsgemäßen Fluidzylinder ist vorgesehen, dass ein auf dem markierten Bereich befindliches Referenzöl, beispielsweise in nicht dunkel markierten Stellen, lichtstärker in dem ersten Wellenlängenbereich als in dem zweiten Wellenlängenbereich reflektiert. Die Wellenlängenbereiche sind somit mindestens teilweise verschieden voneinander.

Die Erfindung beruht auf der Erkenntnis, dass auch in einem relativen Helligkeitsunterschied zwischen den beiden optischen Sensorelementen Informationen über den Fluidzylinder und das auf der Kolbenstange befindliche Öl enthalten sind. Die Kolbenstange des Fluidzylinders verfügt in ihrem regulären Betrieb über einen durch das Öl bereitgestellten Ölfilm auf der Kolbenstange. Der Ölfilm gibt Aufschluss über Art und Zustand des verwendeten Öls. Erfindungsgemäß wird ein Referenzöl vorgesehen, bei dem das Licht stärker in einem ersten Wellenbereich reflektiert wird als in einem zweiten Wellenlängenbereich. Hierdurch spricht der erste optoelektrische Sensor, beispielsweise in einem dunkel markierten Bereich mit Ölfilm, stärker an als der zweite Sensor. Wird nun also eine Situation festgestellt, in der der zweite Sensor stärker anspricht als der erste Sensor, so kann daraus geschlossen werden, dass kein Referenzöl der Messung zugrunde liegt oder das Referenzöl nicht den gewünschten Zustand besitzt.

Erfindungsgemäß wird verschmutztes Öl von der Sensoreinheit erkannt, wenn das Licht in dem zweiten Wellenlängenbereich stärker als in dem ersten Wellenlängenbereich reflektiert wird. Durch eine Verschmutzung des Öls werden in der Reflektion die Anteile von erstem und zweitem Wellenlängenbereich relativ zueinander verschoben, so dass bei einem nicht verschmutzten Referenzöl Licht stärker im ersten Wellenlängenbereich als im zweiten Wellenlängenbereich reflektiert wird, während bei einem verschmutzten Öl aufgrund der Verschmutzung das Licht stärker in dem zweiten Wellenlängenbereich als in dem ersten Wellenlängenbereich reflektiert wird.

Bei der Erfindung enthält das Referenzöl einen Zusatz, so dass Licht stärker in dem ersten Wellenlängenbereich als in dem zweiten Wellenlängenbereich reflektiert wird. Ein nicht mit dem Zusatz versehenes Öl reflektiert das Licht stärker in dem zweiten Wellenlängenbereich als in dem ersten Wellenlängenbereich.

Durch die Verwendung eines Zusatzes im Öl kann vorteilhafterweise auch erkannt werden, ob ein vorgesehenes Öl, beispielsweise ein empfohlenes Öl des Herstellers, nicht verwendet wird. Dies wird beispielsweise festgestellt, wenn nach einem Ölwechsel sich das Verhältnis zwischen Signalstärke im ersten und im zweiten Wellenlängenbereich relativ zueinander geändert hat.

In einer bevorzugten Weiterbildung ist mindestens ein dritter optoelektrischer Sensor vorgesehen, der innerhalb des markierten Bereichs Anfang und Ende der Marken, insbesondere der dunkel markierten Marken, auf der Kolbenstange erfassen kann.

In einer weiteren bevorzugten Ausgestaltung speichert die Sensoreinheit die Messwerte und der Sensor fortlaufend oder in vorbestimmten Zeitabständen und wertet die gespeicherten Messwerte im Hinblick auf Veränderungen aus. Solche Veränderungen können beispielsweise eine mit der Zeit zunehmende
Verschmutzung sein, die zu einer Verschiebung der relativen Signalstärke zwischen den Messwerten im ersten und im zweiten Wellenlängenbereich führt.

In einer bevorzugten Weiterbildung sind die Marken der Markierung äquidistant zueinander angeordnet, wobei die Sensoren und die Marken derart zueinander beabstandet sind, dass die Ausgangssignale der Sensoren eine vorbestimmte Phasenbeziehung zueinander bilden. Bevorzugt durch Abzählen der Marken kann dann die zurückgelegte Strecke der Kolbenstange erfasst werden. Durch die Auswertung der Marken bei einer Relativbewegung zwischen Kolbenstange und Sensor zueinander kann die Position der Kolbenstange erfasst werden. Die Sensoreinheit dient somit auch zur Positionserfassung.

In einer bevorzugten Weiterbildung sind die Sensoren auf einen Bereich der Kolbenstange gerichtet, in dem die Kolbenstange aus dem Zylindermantel austritt. Bevorzugt kann die Sensoreinheit auf einen Bereich ausgerichtet sein, der zwischen dem Austritt der Kolbenstange aus dem Zylindermantel und einem Abstreifer liegt. Durch diese Ausrichtung der Sensoreinheit kann sichergestellt werden, dass im Bereich des Sensors stets ein ausreichender Ölfilm vorliegt.

Der erfindungsgemäße Fluidzylinder wird im besonderen Maße bei Flurförderzeugen eingesetzt. Bei Steuerfunktionen in einem Flurförderzeug ist es häufig wünschenswert, wenn die Position eines Hydraulikzylinders genau bekannt ist. Bevorzugt kann aus der Position auch eine Geschwindigkeit oder Beschleunigung des Hydraulikzylinders abgeleitet werden. Diese Größen erlauben eine präzise und zuverlässige Steuerung des Flurförderzeugs. In dem zudem verschmutztes Hydrauliköl oder nicht verwendetes Referenzöl erkannt wird, kann ein zuverlässiger Betrieb des Fluidzylinders sichergestellt werden.

Eine bevorzugte Ausgestaltung der Erfindung wird nachfolgend an einem Ausführungsbeispiel näher erläutert. Es zeigen:
- Fig. 1: eine schematische Ansicht eines Flurförderzeugs mit einer Reihe von an unterschiedlichen Positionen montierten Fluidzylindern,
- Fig. 2: eine schematische Ansicht einer mit Marken versehenen Kolbenstange mit Sensoranordnung,
- Fig. 3: die relative Strahlleistung über den Wellenlängenbereich einer Lichtquelle und
- Fig. 4: die Empfindlichkeit über den Wellenlängenbereich für die Sensoreinheit.

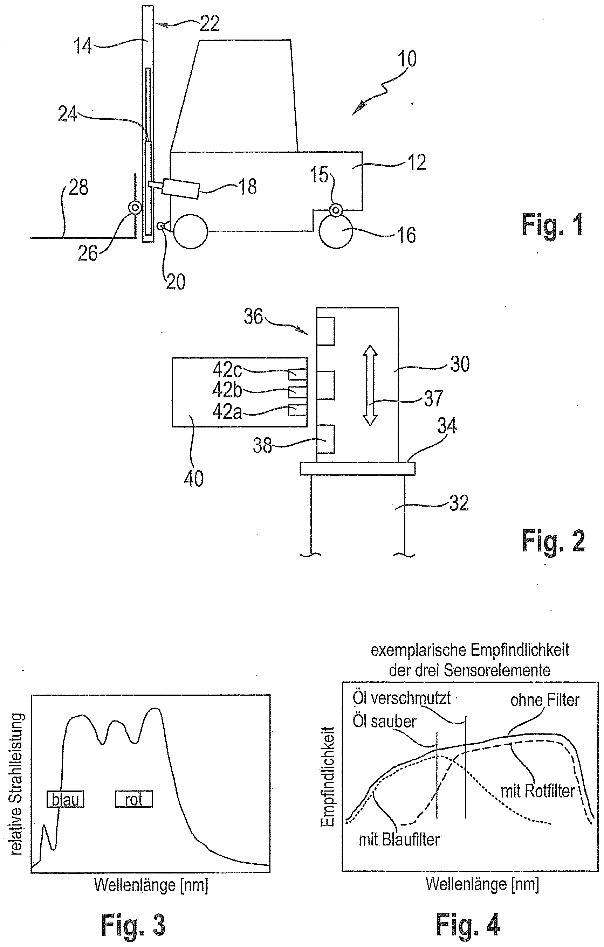

Fig. 1 zeigt in einer schematischen Ansicht einen Hochhubstapler 10 mit einem Antriebsteil 12 und einem Lastteil 14. Fluidzylinder, bevorzugt als Hydraulikzylinder sind beispielhaft dargestellt. Der Antriebsteil 12 besitzt beispielsweise einen hydraulischen Lenkzylinder 15, über den ein oder mehrere gelenkte Räder 16 des Fahrzeugs 10 gestellt werden können.

Ebenfalls ist ein Neigezylinder 18 mit dem Antriebsteil 12 des Fahrzeugs verbunden und bewirkt eine Neigung des in einem Anlenkpunkt 20 schwenkbar gelagerten Hubmastes 22. Der Hubmast 22 selbst besitzt einen Hochhubzylinder 24, über den je nach Ausgestaltung des Hubmastes ein Lasttragmittel oder weitere Turmschüsse anhebbar sind. Ein weiterer, in Fig. 1 schematisch dargestellter Zylinder ist ein Seitenschubzylinder 26, über den die Lastgabeln 28 seitlich, quer zur Fahrzeuglängsrichtung verschiebbar sind.

Fig. 2 zeigt eine schematische Ansicht einer hydraulisch betätigten Kolbenstange 30, die in einem Zylindermantel 32 geführt ist. Der Zylindermantel 32 besitzt einen Zylinderkopf 34, in dem mindestens eine Dichtung vorgesehen ist. Die Kolbenstange 30 ist entlang dem Doppelpfeil 37 verfahrbar.

Die Kolbenstange 30 trägt eine Markierung 36. Aus mehreren, beabstandet zueinander angeordneten Marken wird ein einfallendes Licht wenig oder gar nicht reflektiert, während der metallisch glänzende Bereich zwischen den Marken 38 das Licht stärker reflektiert. Insofern entsteht eine Abfolge von Hell- und Dunkel-Signalen.

Ausgewertet wird die Markierung 36 mit ihren Marken 38 durch die Sensoreinheit 40. Die Sensoreinheit 40 besitzt drei hintereinander angeordnete Sensoren 42a, 42b, 42c. Ebenfalls besitzt die Sensoreinheit eine Beleuchtungseinrichtung, die die Markierung 36 mit ihren Marken im Bereich ausleuchtet. Die Beleuchtungsquelle besitzt eine für das verwendete Leuchtmittel charakteristische Strahlungsleistung.

Fig. 3 zeigt eine relative Strahlungsleistung für eine beispielhafte Beleuchtungsquelle, die in weiß erleuchtet. Von den Sensoren 42a, 42b, 42c ist ein Sensor mit einem Rotfilter versehen, während ein anderer Sensor mit einem Blaufilter versehen ist. Hierdurch entsteht eine unterschiedliche Empfindlichkeit für die Wellenlängenbereiche.

Fig. 4 zeigt die Empfindlichkeit der gestrichelten Linie des Sensors 42a mit einem Rotfilter. Die gestrichelte Linie zeigt, dass der Sensor 42a besonders empfindlich in einem roten Wellenlängenbereich ist. Dies bedeutet, der Rotfilter ist ausgebildet, um blaue Lichtanteile herauszufiltern. Selbstverständlich gibt es auch Farbfilter, die den umgekehrten Effekt besitzen.

Die punktierte Empfindlichkeitskurve in Fig. 4 zeigt die Wirkung des Blaufilters beispielsweise an dem Sensor 42b. Die punktierte Empfindlichkeitskurve besitzt durch den Blaufilter eine besondere Empfindlichkeit bei blauer Wellenlänge. Hinzu kommt die Empfindlichkeit des Sensors 42c, der ohne Filter arbeitet und daher über einen größeren Wellenlängenbereich eine gute Empfindlichkeit besitzt.

In Fig. 4 sind die Hauptwellenlängen des reflektierten Lichts bei sauberem und bei verschmutztem Öl eingetragen. Deutlich zu erkennen ist, dass bei sauberem Öl ein stärkeres Signal für den Sensor 42a mit dem Blaufilter vorliegt, während bei verschmutztem Öl eine deutlich höhere Empfindlichkeit für den Sensor 42b mit dem Rotfilter vorliegt und daher dieser ein stärkeres Signal erzeugt. Um die aufgrund der unterschiedlichen Empfindlichkeit gemessenen Werte in Beziehung zueinander zu setzen, liegen auch ungefilterte Messwerte des Sensors 42c vor, mit denen die gefilterten Messwerte ins Verhältnis gesetzt werden können. Das Verhältnis der Messwerte macht es dann möglich, zu unterscheiden, ob aufgrund einer Veränderung des Öls ein Signalwert abgefallen ist oder ob eine dunkle Marke für kleinere Messwerte sorgt.

Mit der Sensoreinheit, die mit drei optoelektrischen Sensoren, beispielsweise in Form von Photodioden, ausgestattet ist, kann in an sich bekannter Weise die Position und/oder die Geschwindigkeit der Kolbenstange ermittelt werden. Durch die Auswertung des reflektierten Lichts kann auch der Ölzustand am Messort, beispielsweise nahe an der Dichtung unter einem Abstreifer im Zylinderkopf, erfasst werden. Eine Verschiebung der relativen Signalstärke über der nicht markierten und mit Öl leicht benetzten Kolbenstange wird hierbei ausgewertet. Begünstigt wird dieser Umstand durch die übliche Blaufärbung des verwendeten Hydraulikmediums.

Für den erfindungsgemäßen Messvorgang ist es vorteilhaft, wenn die Lichtquelle ein weitgehend kontinuierliches Lichtspektrum besitzt. Das in Fig. 3 dargestellte Spektrum entspricht einer Weißlicht-LED. Fig. 4 zeigt die Empfindlichkeit der drei Sensorelemente. Durch Verknüpfung der Empfindlichkeit mit Hilfe der relativen Strahlleistung kann das Ausgangssignal bestimmt werden.

Mit Hilfe des dritten, ungefilterten Sensorelements wird ein Nullpunktabgleich der erfassten Messwerte realisiert, um Veränderungen der Kolbenstange oder der Markierung mit der Zeit zu erkennen und beispielsweise durch Nachregeln der Lichtquelle zu kompensieren. Die Auswertung ergibt dann, für Signal _b mit Blaufilter und Signal _r mit Rotfilter:
- Öl sauber: Verhältnis Signal_b zu Signal_r > Schwellwert,
- Öl verschmutzt: Verhältnis Signal_b zu Signal_r ≤ Schwellwert.

Durch Wahl eines geeigneten Schwellwerts, der auch in der Nähe von 1 liegen kann, können sauberes und verschmutztes Öl voneinander unterschieden werden.

Selbstverständlich können auch die Verhältnisse der Signale _b und Signal _r zu dem ungefilterten Signal betrachtet werden. Zusätzlich kann die Sensoreinheit 40 mit einem Temperaturelement ausgestattet sein, um auftretende Temperatureffekte für die Lichtquelle und die Photodioden zu kompensieren.

Die richtige Ölart kann beispielsweise nach einem Ölwechsel detektiert werden, wenn das Öl noch sauber ist. In diesem Fall liegt das Verhältnis von für Signal_b zu Signal_r ≤ Schwellwert nicht verschmutztes Öl vor, sondern es wurde ein falsches Öl eingefüllt.

### Bezugszeichenliste

- 10: Hochhubstapler
- 12: Antrieb steil
- 14: Lastteil
- 15: Lenkzylinder
- 16: Räder
- 18: Neigezylinder
- 20: Anlenkpunkt
- 22: Hubmast
- 24: Hochhubzylinder
- 26: Seitenschubzylinder
- 28: Lastgabel
- 30: Kolbenstange
- 32: Zylindermantel
- 34: Zylinderkopf
- 35: Doppelpfeil
- 36: Markierung
- 38: Marken
- 40: Sensoreinheit
- 42a: Sensor
- 42b: Sensor
- 42c: Sensor

## Patentansprüche

1. Fluidzylinder mit einer in einem Zylindermantel geführten Kolbenstange, an der eine Markierung mit einer Vielzahl von Marken und ein Ölfilm mit einem Referenzöl vorgesehen sind, und mit einer auf die Markierung gerichteten, optischen Sensoreinheit, wobei
die Sensoreinheit eine Lichtquelle und mindestens zwei optoelektronische Sensoren (42a, 42c) aufweist, von denen einer für einen ersten Wellenlängenbereich und einer für einen zweiten Wellenlängenbereich stärker empfindlich ist,
**dadurch gekennzeichnet, dass**
das Referenzöl einen Zusatz enthält, so dass Licht stärker in dem ersten Wellenlängenbereich als in dem zweiten Wellenlängenbereich reflektiert wird, während nicht mit dem Zusatz versehenes Öl das Licht stärker in dem zweiten Wellenlängenbereich als in dem ersten Wellenlängenbereich reflektiert, und die Sensoreinheit verschmutztes Öl erkennt, wenn das Licht in dem zweiten Wellenlängenbereich stärker als in dem ersten Wellenlängenbereich reflektiert wird.

2. Fluidzylinder nach Anspruch 1, **dadurch gekennzeichnet, dass** die Sensoreinheit ebenfalls erkennt, wenn nach einem Ölwechsel kein Referenzöl verwendet wird, wobei sich in diesem Fall das Verhältnis zwischen Signalstärke im ersten und im zweiten Wellenlängenbereich relativ zueinander geändert hat.

3. Fluidzylinder nach Anspruch 1 oder 2, **dadurch gekennzeichnet, dass** mindestens ein dritter Sensor vorgesehen ist, der innerhalb der Markierung Anfang und Ende der Marken sensiert.

4. Fluidzylinder nach einem der Ansprüche 1 bis 3, **dadurch gekennzeichnet, dass** die Sensoreinheit die Messwerte der Sensoren fortlaufend oder in vorbestimmten Zeitabständen speichert und im Hinblick auf Veränderungen hin auswertet.

5. Fluidzylinder nach einem der Ansprüche 1 bis 4, **dadurch gekennzeichnet, dass** die Marken in der Markierung äquidistant angeordnet sind, wobei die Sensorelemente und die Marken derart voneinander beabstandet sind, dass die Ausgangssignale der Sensorelemente eine vorbestimmte Phasenverschiebung zueinander besitzen.

6. Fluidzylinder nach Anspruch 5, **dadurch gekennzeichnet, dass** durch Abzählen der Marken eine zurückgelegte Strecke der Kolbenstange und/oder deren Geschwindigkeit erfasst wird.

7. Fluidzylinder nach einem der Ansprüche 1 bis 6, **dadurch gekennzeichnet, dass** die Sensorelemente auf einen Bereich der Kolbenstange gerichtet sind, in dem die Kolbenstange aus dem Zylindermantel austritt.

8. Flurförderzeug mit einem Fluidzylinder nach einem der vorstehenden Ansprüche.

9. Flurförderzeug nach Anspruch 8, **dadurch gekennzeichnet, dass** die Sensoreinheit zur Positionserfassung der Kolbenstange dient.

## Claims

1. Fluid cylinder comprising a piston rod guided in a cylinder jacket on which a marking with a plurality of marks and an oil film with a reference oil are provided, and an optical sensor unit directed towards the marking,
**characterised in that**
the sensor unit comprises a light source and at least two optoelectronic sensors (42a, 42c), one of which is more sensitive to a first wavelength range and one of which is more sensitive to a second wavelength range, and that the reference oil contains an additive such that light is reflected more strongly in the first wavelength range than in the second wavelength range, while oil not provided with the additive reflects the light more strongly in the second wavelength range than in the first wavelength range, and the sensor unit detects contaminated oil when the light is reflected more strongly in the second wavelength range than in the first wavelength range.

2. Fluid cylinder according to claim 1, **characterized in that** the sensor unit also detects when no reference oil is used after an oil change, in which case the ratio between signal strength in the first and second wavelength ranges has changed relative to each other.

3. Fluid cylinder according to claims 1 or 2, **characterized in that** at least one third sensor is provided which senses the beginning and end of the marks within the marking.

4. Fluid cylinder according to one of claims 1 to 3, **characterized in that** the sensor unit stores the measured values of the sensors continuously or at predetermined time intervals and evaluates them with regard to changes.

5. Fluid cylinder according to one of claims 1 to 4, **characterized in that** the marks are arranged equidistantly in the marking, and the sensor elements and the marks are spaced from one another such that the output signals of the sensor elements have a predetermined phase shift with respect to one another.

6. Fluid cylinder according to claim 5, **characterized in that** a covered distance of the piston rod and/or its speed is detected by counting the marks.

7. Fluid cylinder according to one of claims 1 to 6, **characterized in that** the sensor elements are directed towards a region of the piston rod in which the piston rod emerges from the cylinder jacket.

8. An industrial truck with a fluid cylinder according to one of the previous claims.

9. Industrial truck according to claim 8, **characterised in that** the sensor unit serves to detect the position of the piston rod.

## Revendications

1. Vérin doté d'une tige de piston guidée dans un corps de vérin, sur laquelle sont prévus un marquage avec de multiples repères et un film d'huile avec une huile de référence, et d'une unité de capteur optique dirigée vers le marquage,
dans lequel l'unité de capteur présente une source lumineuse et au moins deux capteurs optoélectroniques (42a, 42c), dont l'un est plus sensible pour une première plage de longueurs d'onde et l'autre pour une seconde plage de longueurs d'onde,
**caractérisé en ce que** l'huile de référence contient un additif, de sorte que la lumière est plus réfléchie dans la première plage de longueurs d'onde que dans la seconde plage de longueurs d'onde, tandis que l'huile dépourvue de l'additif réfléchit plus la lumière dans la seconde plage de longueurs d'onde que dans la première plage de longueurs d'onde, et que l'unité de capteur détecte de l'huile sale, si la lumière est plus réfléchie dans la seconde plage de longueurs d'onde que dans la première plage de longueurs d'onde.

2. Vérin selon la revendication 1, **caractérisé en ce que** l'unité de capteur détecte également si aucune huile de référence n'est utilisée après une vidange d'huile, dans lequel le rapport entre l'intensité des signaux dans la première et dans la seconde plage de longueurs d'onde a varié en l'occurrence de manière relative d'un signal à l'autre.

3. Vérin selon la revendication 1 ou 2, **caractérisé en ce qu'**au moins un troisième capteur est prévu, qui détecte à l'intérieur du marquage début et fin des repères.

4. Vérin selon l'une des revendications 1 à 3, **caractérisé en ce que** l'unité de capteur enregistre les valeurs de mesure des capteurs en continu ou à des intervalles prédéfinis et les analyse au vu des variations.

5. Vérin selon l'une des revendications 1 à 4, **caractérisé en ce que** les repères sont disposés de manière équidistance à l'intérieur du marquage, dans lequel les éléments de capteur et les repères sont espacés les uns des autres, de sorte que les signaux de sortie des éléments de capteur possèdent un déphasage prédéfini les uns par rapport aux autres.

6. Vérin selon la revendication 5, **caractérisé en ce qu'**une distance parcourue de la tige de piston et/ou sa vitesse sont saisies par le décompte des repères.

7. Vérin selon l'une des revendications 1 à 6, **caractérisé en ce que** les éléments de capteur sont dirigés vers une zone de la tige de piston, dans laquelle la tige de piston sort du corps de vérin.

8. Chariot de manutention doté d'un vérin selon l'une des revendications précédentes.

9. Chariot de manutention selon la revendication 8, **caractérisé en ce que** l'unité de capteur sert à détecter la position de la tige de piston.
